# EUROPEAN PATENT APPLICATION

(11) **EP 1 538 544 A2**
(43) Date of publication of application: **08.06.2005**
(21) Application number: 04106212.6
(22) Date of filing: 01.12.2004
(51) Int. Cl.: G06F 17/60

(54) **Computer system for the management of maintenance and renewal processes of electric transmission networks**

(30) Priority: 04.12.2003 IT MI20032376
(71) Applicant: T.E.R.NA. Trasmissione Elettricità Rete Nazionale S.P.A., 00198 Roma (IT)
(72) Inventor: Mobili, Sergio, I-20148, Milano (IT); Bisci, Diego, I-00139, Roma (IT); Di Bartolomeo, Evaristo, I-65127, Pescara (IT)
(74) Representative: Mittler, Enrico

(57) **Abstract**

The following invention describes is a computer system for the management of maintenance and renewal processes of electric transmission networks. The system comprises a central unit (1) having a data base (2) containing archives (3, 4, 5) relating to all the current and historic information of the plants and components for which the maintenance and renewal is managed, a set of engineering models (6) that contain the maintenance on condition logics of each type of plant or component and suggest, when activated, maintenance interventions on that plant or component, a company management program (10) that receives and carries out the suggestions of the above mentioned engineering models (6) and means (15) for the exchange of information between said data base (2), said engineering models (6) and said company management program (10). The computer system also comprises telecontrol devices (7) suitable for notifying the central unit (1) of the events that interest the plants and the components under control and specialist monitoring devices (8) installed on specific plants or components under control and connected to said central unit (1) to send them data relating to the plants and components under control.

## Description

The present invention refers to a computer system for the management of maintenance and renewal processes of electric transmission networks.

The electricity industry is undergoing heavy restructuring, dominated by liberalisation and by growing competitive pressure. Owning operators of the distribution and transmission networks are also heavily hit by the restructuring process. In fact, even though the transmission and distribution of electrical energy constitute a natural monopoly, the tariffs for the remuneration of the service and the levels of quality at which the service must be supplied are established by the competent authorities on the basis of a thorough analysis of the costs that takes reference from the "best practice" at international level. In addition, the owner of the network is expected to reply directly if the quality of the service (e.g. number of interruptions) is not in line with the level defined in the convention.

In this new scenario the owner operators of the transmission networks have to undertake strategies for controlling the costs and for improving the reliability of the network: an efficient management of the transmission and distribution network of electricity becomes the main factor of success for the operators. In particular the optimisation of the maintenance process is among the priority objectives of the owner of the network, in order to limit the costs without prejudicing the quality of the service and to guarantee the maintenance of the patrimonial value in time.

In recent years the approach called "maintenance on condition" has consolidated for the sector of electric transmission networks aiming at carrying out interventions on a plant or on one of its components only when its condition requires so, that is only at the moment in which phenomena of degradation are detected on the component which within a certain time would lead to comprising its functionality.

If the maintenance on condition approach from the methodological point of view is consolidated enough, the same cannot be said for the instruments that support its application. In fact a system supporting the maintenance on condition for an electric transmission network has to integrate various elements, such as a company data base with the information on the components of the network, on-line monitoring systems of the state of the components, decisional logics to decide the maintenance interventions to be carried out on the basis of current state of the components and of their passed history. In addition there is the problem of the geographic extension of the electric transmission network and of the high noise of components of which it is constituted.

The object of the present invention is to produce a computer system for the management of maintenance and renewal processes of electric transmission networks that overcomes the problems mentioned above.

More in particular, object of the present invention is to constitute a computer system of synthesis of the performances of the plants (high and extremely high voltage stations, transmission lines) in support of the decisions of maintenance and renewal of the plants, integrating between them the information available in the various information systems existing (for example of the ERP type, that is Enterprise Resources Planning type), in the telecontrol systems in real time (for example of the SCADA type) and in the specialist monitoring systems already installed on a part of the stations.

In accordance with the present invention this object is achieved by means of a computer system for the management of maintenance and renewal processes of electric transmission networks, characterised in that it comprises:
a) a central unit comprising:
   a1) a data base containing archives relating to all the current and historic information of the plants and components of which the maintenance and renewal are managed;
   a2) a set of engineering models that contain the maintenance on condition logics of each type of plant or component and suggest, when activated, maintenance interventions on that plant or component;
   a3) a company management program that receives and carries out the suggestions of above-mentioned engineering models;
   a4) means for exchanging information between said data base, said engineering models and said company management program;
b) telecontrol devices suitable for notifying the central unit of the events that interest the plants and the components under control;
c) specialist monitoring devices installed on specific plants or components under control and connected to said central unit to send them data relating to the plants and components under control.

Thanks to the above-mentioned organisation the computer system according to the invention is capable of receiving the data relating to a certain plant or component under control, activating a specific engineering model corresponding to said plant or component so that it elaborates and compares the data received and the information memorized in the archives of the data base and finally provides suggestions regarding the maintenance actions to be undertaken and the dates for carrying out such maintenance actions, ordering and managing the maintenance actions by means of the company management program.

An engineering model can be activated automatically every time data of importance relating to a component or a plant is acquired from the field (for example, the triggering of a switch, availability of the results of a chemical/physics analysis of the oil of a transformer), or at the end of preset intervals (for example, 1 month); in this case the model processes only the data that it receives from the field and that are in the archives and on this basis it suggests possible maintenance interventions.

Otherwise, an engineering model can be activated interactively, upon request of the maintenance technician, following an inspection control carried out on the component or plant. In this case the technician accesses the central unit from any PC connected to the company computer network and by means of a special interface is guided to enter the data detected during the inspection. The data supplied in this manner are processed by the engineering model concerned, combining them also with the information relating to the component, which is contained in the historical archives of the data base.

The maintenance actions suggested by the engineering model, together with the date by which said actions must be carried out, are transmitted automatically to the company management program, that manages according to the usual modalities the entire process relating to the maintenance (opening maintenance order, carrying out the maintenance, reporting the resources). At the end of the maintenance intervention (closing the maintenance order), the central unit and the relative database are notified by the company management program that the action requested has been carried out.

In addition a data reporting and analysis environment is foreseen in which, by combining the various technical and anagraphical information of the components included in the data base, indices relating to the technical condition of the components and their reliability are elaborated. On the basis of these indices the maintenance policies are constantly assessed and, if necessary, reviewed and the actions concerning the renewal of the plants are programmed. Functions are also available for assessing the programmed and accidental unavailability of the various functional units of the plants.

The computer system according to the present invention also makes use of computer technologies updated to the state of the art, and precisely:
- Distributed architecture based on Internet. This proves to be a winning choice as the system can be used immediately by hundreds of maintenance technicians who operate on national territory; in the future it is planned to make access to the system possible also by means of palm computers, so that the maintenance technician can interact with the central unit directly from the detection and maintenance field.
- Warehouses for storing data of the type "data warehouse" for integrating historical information coming from various environments (company management program, telecontrol devices, monitoring devices) and archiving the results of the engineering models.
- Expert systems (that is algorithms based on experiences passed on as they are acquired) for producing logical-deductive models of the engineering models. The formalisation and automation of the logics subtended to the decisions regarding the maintenance actions to be undertaken constitutes a great step ahead towards the consolidation and capitalisation of a patrimony of knowledge that constitutes one of the most precious "intangible assets" of the company. The technology of expert systems is the most efficient solution to codify and make this knowledge operative. The adoption of a suitable language (preferably Java) for producing the expert systems can also help in making the best use of the architecture of the whole computer system.
- Data extraction techniques of the type "data mining" for the analysis of the historical archives in order to extract hidden reports to enrich the diagnostic models.

The characteristics of the present invention will appear even more evident from the following description of an embodiment thereof, illustrated as non-limiting example in the enclosed drawings, in which:
Figure 1 is a block diagram that shows the general architecture of a computer management system according to the present invention;
Figure 2 is a block diagram that shows the modalities of acquiring and processing the data of the components by the engineering models;

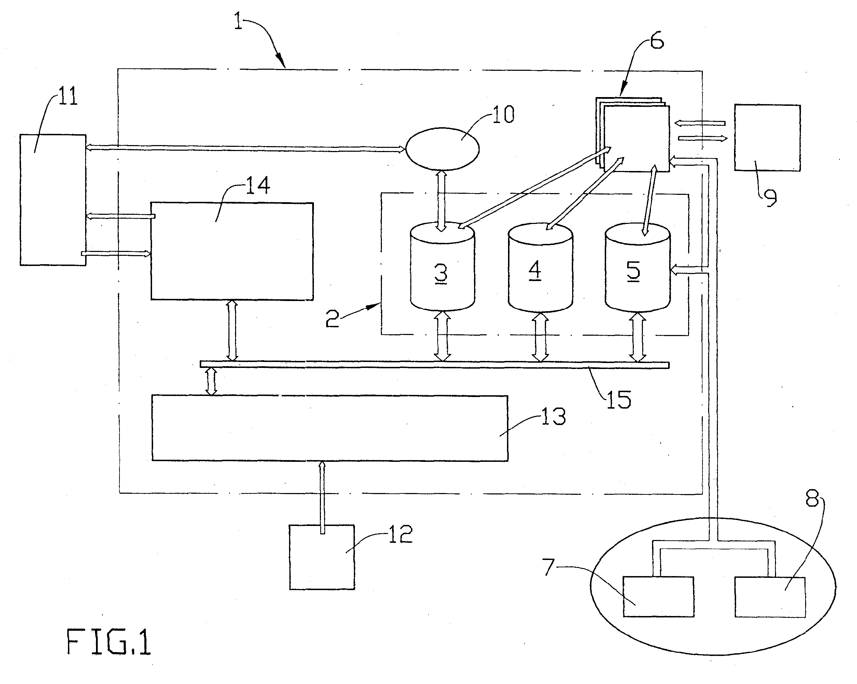

A central unit 1 is illustrated schematically in Figure 1, which is provided with a data base 2 including a series of archives relating to all the current and historic information of the plants and components for which the maintenance and renewal is managed. More precisely, the data base 2 contains an archive 3 relating to the network components, an archive 4 relating to the anomalies detected and to the measures taken and an archive 5 relating to the telecontrol and monitoring data. Of course the subdivision into three archives is purely indicative.

The central unit 1 also comprises a set of engineering models 6 that contain and elaborate the maintenance on condition logics of each type of component.

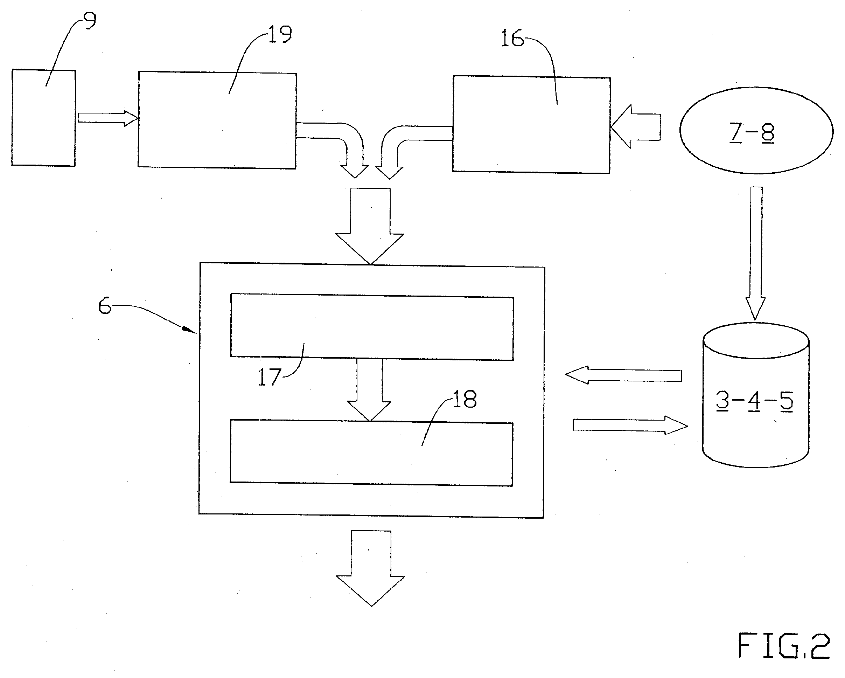

There is an engineering model for each component belonging to the plant and said model is activated according to two distinctive modalities, illustrated in Fig. 2: either automatically or interactively.

The automatic activation comes about when a telecontrol device 7 or a specialist monitoring device 8, together constituting the so-called "field" or site of installation of the component under control, sends to the central unit 1 one or more data items of interest 16 relating to a component (for example, the triggering of a switch, the availability of the results of a chemical/physics analysis of the oil of a transformer) or the expiry of preset intervals (for example, every six months). In this case the appropriate engineering model processes only the data that it receives from the field and those that are in the archives of the data base 2 and on the basis of them carries out an assessment of the anomalies (block 17) and, using appropriate decisional logics (block 18), communicates the anomalies and suggests the maintenance interventions.

The interactive activation comes about upon request of a maintenance technician, schematised with 9 in the drawings, following an inspection control carried out on the component. In this case the maintenance technician accesses the central unit 1 from any PC connected to the company network and by means of a special interface is guided to enter the data 19 detected during the inspection. The data supplied in this manner are processed by the appropriate engineering model that in the manner already described combines them with the information relating to the component which is contained in the historical archives 3-4-5 and produces in output information on the anomalies detected and on the maintenance actions suggested.

The anomalies are recorded in the archive 4 of the data base 1 and the maintenance actions suggested, together with the date by which such actions have to be carried out, are transmitted automatically to a company management program, that shares the anagraphical and technical information contained in the archives 3-4-5 of the data base 2 with the rest of the control unit 1.

The company management program 10, for example of the type known as SAP-PM, starts up the maintenance operation suggested by the engineering model and manages it until the end of the operation, giving the information necessary for the execution of the maintenance (opening the maintenance order, execution of the maintenance, reporting of the resources, etc.) to an operative centre 11. At the end of the maintenance (closing the maintenance order) the management program 10 notifies the operative centre 11 that the action requested has been carried out and accordingly updates the archives 3-4-5.

The end of execution data of said operation is supplied to the database 2 of the central unit 1 by a peripheral operator 12 by means of a reporting environment 13. A data analysis environment 14 then permits, by combining the various technical and anagraphical information on the components present in the archives 3-4-5, the elaboration of the indices relating to the technical condition of the components and their reliability. On the basis of these indices the maintenance policies are constantly assessed and if necessary reviewed and the actions concerning the renewal of the plants are programmed. Functions are also available for assessing the programmed and accidental unavailability of the various functional units of the plant. In this manner it is possible to verify the effectiveness of the system proposed.

In conclusion the analysis environment 14 also includes functions for refining the logics of the engineering models. In particular "data mining" instruments are available that permit the extraction of new correlations between characteristics/functioning state of the components and maintenance actions from the historical archives.

Data bus 15 makes it possible the transmission of data inside the central unit 1.

Instead for the exchange of data with the outside an Internet connection network is used because it can be used by numerous maintenance technicians in the case of very large plants.

Preferably "data warehouse" techniques are used for storing the data coming from telecontrol systems 7 and monitoring systems 8 and for archiving the data coming from the engineering models 6.

Expert systems are still preferably used, that is algorithms on behavioural experiences of each component as it acquired, for producing the decisional logics of the engineering models 6.

Again "data mining" techniques are preferably used for the analysis of the data contained in the historical archives of the data base 2 so as to extract hidden reports, in order to enrich the diagnostic models.

## Claims

1. Computer system for the management of maintenance and renewal processes of electric transmission networks, **characterised in that** it comprises:
a) a central unit (1) comprising:
a1) a data base (2) containing archives (3, 4, 5) relating to all the current and historic information of the plants and components for which the maintenance and renewal is managed;
a2) a set of engineering models (6) that contain the maintenance on condition logics of each type of plant or component and suggest, when activated, maintenance interventions on that plant or component;
a3) a company management program (10) that receives and carries out the suggestions of the above mentioned engineering models (6);
a4) means (15) for the exchange of information between said data base (2), said engineering models (6) and said company management program (10);
b) telecontrol devices (7) suitable for notifying the central unit (1) of the events that concern the plants and the components under control;
c) specialist monitoring devices (8) installed on specific plants or components under control and connected to said central unit (1) for sending them data relating to the plants and components under control.

2. System according to claim 1, **characterised in that** said engineering models (6) are automatically activated by the data sent by said telecontrol devices (7) and by said monitoring devices (8).

3. System according to claim 1, **characterised in that** said engineering models (6) are automatically activated at preset intervals of time.

4. System according to claim 1, **characterised in that** said engineering models (6) are activated interactively upon request of a maintenance technician (9) following an inspection control carried out on the component.

5. System according to claim 1, **characterised in that** it comprises reporting means (13) suitable for receiving an end of maintenance execution data coming from a peripheral operator (12).
and the data coming from data storage means (1) to process indices relating to the components and updating the data present in said data storage means (1).

6. System according to claim 5, **characterised in that** it comprises a data analysis environment (14) which, combining the various technical and anagraphical information on the components present in the archives (3, 4, 5), processes indices relating to the technical condition of the components and to their reliability, on the basis of which the maintenance policies are constantly assessed and if necessary reviewed and the actions concerning the renewal of the plants programmed.
